# EUROPEAN PATENT SPECIFICATION

(11) **EP 3 816 923 B1**
(45) Date of publication and mention of the grant of the patent: **01.11.2023**
(21) Application number: 19880093.0
(22) Date of filing: 09.09.2019
(51) Int. Cl.: G06F 21/62, G06F 21/64, G06Q 20/02, G06Q 20/10, G06Q 20/38, G06Q 20/32, H04L 9/32, H04L 9/40, H04W 12/02, H04W 12/108, H04W 12/60, H04L 9/00, G06Q 30/06, G06Q 40/00, G06Q 20/40

(54) **BLOCKCHAIN-BASED PRIVATE TRANSACTIONS AND USAGE METHOD AND APPARATUS THEREFOR**
AUF BLOCKCHAIN BASIERENDE PRIVATE TRANSAKTIONEN UND NUTZUNGSVERFAHREN UND VORRICHTUNG DAFÜR
TRANSACTIONS PRIVÉES BASÉES SUR UNE CHAÎNE DE BLOCS ET PROCÉDÉ ET APPAREIL D'UTILISATION ASSOCIÉS

(30) Priority: 31.10.2018 CN 201811283594
(43) Date of publication of application: 05.05.2021
(73) Proprietor: Advanced New Technologies Co., Ltd., George Town, Grand Cayman KY1-9008 (KY)
(72) Inventor: PAN, Dong, Hangzhou, Zhejiang 311121 (CN)
(74) Representative: Goddar, Heinz J.
(86) International application number: PCT/CN2019/104955
(87) International publication number: WO 2020/088109

(56) References cited:
- CN-A- 107 392 040
- CN-A- 107 426 170
- CN-A- 107 682 337
- CN-A- 108 616 539
- CN-A- 109 584 066
- CN-A- 109 614 813
- US-A1- 2018 293 556

## Description

### TECHNICAL FIELD

The present specification relates to the field of data processing technologies, and in particular, to blockchain-based privacy transactions and blockchain-based privacy transaction application methods and apparatuses.

### BACKGROUND

The blockchain technology, also referred to as the distributed ledger technology, is an emerging technology that several computing devices participate in "bookkeeping" to jointly maintain a complete distributed database. The blockchain technology has been widely used in many fields because the blockchain technology has features of decentralization and transparency, each computing device can participate in database recording, and data can be quickly synchronized between the computing devices.

However, in a current mainstream blockchain architecture, all nodes store the same data. In some actual scenarios, a blockchain node participant does not want its data to be obtained by another node.

CN 107392040 A discloses a consensus verification method and device. A regulatory node is responsible for verifying whether a transaction request is valid. If the transaction request is valid, the regulatory node generates a digest based on specified data in transaction data, and sends the digest and non-specified data included in the transaction data to each consensus node for consensus verification. Each consensus node stores the digest and the non-specified data in a blockchain after the consensus verification succeeds. As such, the consensus node receives no specified data, and therefore does not store the specified data in the blockchain. As a result, the specified data is not disclosed. In addition, the digest can be used to verify whether the specified data that is not stored in the blockchain is tempered with. CN107426170 A discloses a further blockchain based method to provide privacy to medical data.

### SUMMARY

The invention is defined by the independent claims. Preferred embodiments of the invention are described in the dependent claims. Below, for the previously described situation and problem in a blockchain data processing procedure, according to a first aspect of the invention a blockchain-based privacy transaction method is provided and is applied to a node device of a trusted user. The trusted user is determined by a trust setting transaction stored in a distributed database of a blockchain, and the trust setting transaction includes identifiers of all trusted users corresponding to a blockchain user of the blockchain. The method includes the following: the first message sent by the blockchain user is received, where the first message includes privacy-unprotected first data information; and privacy-protected second data information; the privacy-unprotected first data information is converted into the privacy-protected second data information; the first data information is stored in a local database of the node device of the trusted user; and a second transaction is sent to the blockchain, where the second transaction includes the second data information, so that the second transaction is recorded in the distributed database of the blockchain after being verified; the trust setting transaction is obtained from the distributed database on the blockchain; other trusted users trusted by the blockchain user are determined based on the trust setting transaction; and the privacy-unprotected first data information and the privacy-protected second data information are transmitted in an off-chain method to node devices of the other trusted users so that the privacy-unprotected first data information is stored in local databases of the node devices of the other trusted users after it is verified that the privacy-protected second data information is converted from the privacy-unprotected first data information.

According to the invention, a blockchain-based privacy transaction apparatus is provided and configured to carry out the above steps of the blockchain based privacy transaction method.

The present invention further provides one or more computer-readable storage media storing a computer program which, when run by a processor of a computer device, causes the processor to execute the above steps of the blockchain based privacy transaction method.

It can be seen from the previous technical solutions that in the blockchain-based privacy transaction methods and apparatuses, a user sets the trusted user on the blockchain using the trust setting transaction, and publishes to the trusted user the first data information whose privacy the user wants to protect, and the trusted user uploads the privacy-protected second data information converted from the first data information to the distributed database of the blockchain, so that consensus verification is performed on the privacy-protected second data information on the blockchain. The application of the privacy transaction methods provided in the present specification can not only protect the privacy of the first data information whose privacy was not protected by the user, and prevent any other nodes on the blockchain from obtaining the first data information, but also store and protect on the blockchain the second data information converted from the first data information data. When any node needs to use or verify the second data information in the future, the node can obtain the first data information from the trusted node set by the user, and verify a mapping relationship between the first data information and the second data information. Therefore, not only the second data information stored in the blockchain is verified, but also the original of the first data information can be obtained and be used.

In the previous technical solutions provided in the present specification, based on a distributed database storage mechanism of the blockchain technology, the second data information of the user is recorded in all nodes in a decentralized way, jointly maintained by nodes of all participants, and is synchronized in real time. All records are traceable. In addition, based on a consensus protocol of the blockchain, the second data information provided by each user cannot be tampered after being provided, thereby ensuring authenticity and security of the second data information of the user. Based on trust of the trusted user, when the first data information corresponding to the second data information is used, the trusted user provides the original of the first data information, thereby ensuring authenticity, security, and accuracy of the first data information.

### BRIEF DESCRIPTION OF DRAWINGS

FIG. 1 is a flowchart illustrating a blockchain-based privacy transaction method performed by a node device of a trusted user, according to some example embodiments of the present specification;
FIG. 2 is a flowchart illustrating transmission of a privacy-unprotected message by a node device of a trusted user to a node device of another trusted user, according to some example embodiments of the present specification;
FIG. 3 is a flowchart illustrating a privacy-protected transaction application method performed by any node device on a blockchain, according to some example embodiments of the present specification;
FIG. 4 is a flowchart illustrating a blockchain-based privacy transaction method and a privacy-protected transaction application method, according to other embodiments of the present specification;
FIG. 5 is a schematic diagram illustrating a blockchain-based privacy transaction apparatus, according to some embodiments of the present specification;
FIG. 6 is a schematic diagram illustrating a blockchain-based privacy transaction application apparatus, according to some embodiments of the present specification; and
FIG. 7 is a structural diagram of hardware running some embodiments of a blockchain-based privacy transaction apparatus or a privacy transaction application apparatus, according to the present specification.

### DESCRIPTION OF IMPLEMENTATIONS

Example embodiments are described in detail here, and the example embodiments are presented in the accompanying drawings. When the following description relates to the accompanying drawings, unless specified otherwise, same numbers in different accompanying drawings represent same or similar elements. Implementations described in the following example embodiments do not represent all implementations consistent with one or more embodiments of the present specification. On the contrary, the implementations are only examples of apparatus and methods that are described in the appended claims in detail and consistent with some aspects of one or more embodiments of the present specification.

It is worthwhile to note that steps of a corresponding method are not necessarily performed in a sequence shown and described in the present specification in another embodiment. In some other embodiments, the method can include steps more or less than those described in the present specification. In addition, a single step described in the present specification can be divided into a plurality of steps in another embodiment for description. However, the plurality of steps described in the present specification can also be combined into a single step for description in another embodiment.

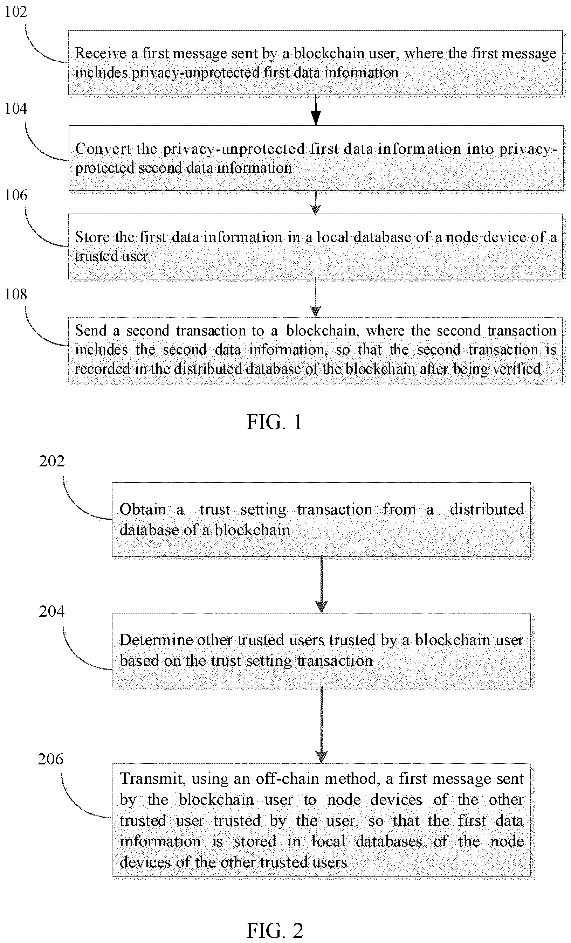

As shown in FIG. 1, an example embodiment of the present specification provides a blockchain-based privacy transaction method. The blockchain described in some embodiments can be a P2P network system that has a distributed data storage structure and that is formed by all node devices using a consensus protocol. Data in the blockchain is distributed in a time-connected "block". A later block includes a data digest of a previous block, and replicates of all the data of all or some of the node devices are based on a specific consensus protocol (for example, PoW, PoS, DPoS, or PBFT, etc.). A person skilled in the art knows that because a blockchain system runs under a corresponding consensus protocol, data recorded in a blockchain database is difficult to be tampered with by any node device. For example, a blockchain using PoW consensus protocol requires a network-wide attack to have computational power of at least 51 percent of the hash rate of the blockchain in order for the attack to tamper with existing data of the blockchain. Therefore, a blockchain system has features that other centralized database systems cannot achieve: data security assurance, and attack and tampering prevention.

A transaction described in the present specification is a piece of data that is created by a user using a node device on a blockchain and that is ultimately needed to be published to a distributed database of the blockchain. Transactions in the blockchain are divided into a transaction in a narrow sense and a transfer in a broad sense. A transaction in a narrow sense is a value transfer published by a user to the blockchain. For example, in a traditional bitcoin blockchain network, a transaction can be a fund transfer initiated by the user in the blockchain. The transaction in a broad sense is any piece of data published by the user to the blockchain: For example, an operator can establish a consortium blockchain based on actual service needs, and deploy, based on the consortium blockchain, some other types of online services (for example, a house renting service, a vehicle scheduling service, an insurance claim service, a credit service, and a medical service) that are unrelated to a value transfer. In such a consortium blockchain, the transaction can be a service message or a service request that is published by the user in the consortium blockchain and that has a service intention. As another example, in a ledger-type blockchain, the transaction can be data (such as an account balance) sent by the user to the blockchain to change an account status of the user. Therefore, any data published by the user to the distributed database of the blockchain, regardless of whether the data is stored in a block body, a block header, or another location in a block, shall belong to the "transaction" described in the present invention.

In addition, it is worthwhile to note that the node device described in the present specification can include not only a full node device that stores all the data in the distributed database of the blockchain, but also a light node device that stores part of the data in the distributed database of the blockchain, and other terminal devices or client devices. This is not limited in the present specification.

The blockchain-based privacy transaction method shown in FIG. 1 is applied to a node device of a trusted user. The trusted user is determined by a trust setting transaction stored in the distributed database of the blockchain, and the trust setting transaction includes identifiers of all trusted users determined by a blockchain user, such as an account address of the trusted user, a public key of the trusted user, or an account name of the trusted user, etc, that can uniquely determine information about the trusted user. The blockchain user can select and set a trusted user corresponding to the blockchain user based on trust of the blockchain user to another user, for example, can select a financial institution with a relatively high credit, an authentication institution, a supervisor institution user, or another institution. The trust setting transaction can be directly published by the blockchain user to the blockchain, or can be published by having the blockchain user invoke a smart contract declaring logic that sets the trusted user. This is not limited here.

The method shown in FIG. 1 includes: Step 102: Receive a first message sent by the blockchain user, where the first message includes privacy-unprotected first data information.

The first message sent by the blockchain user in step 102 is received by the node device of the trusted user that communicates with the blockchain user through an off-chain channel. The off-chain channel means that a transaction is not sent to the distributed database of the blockchain, but a network communication method such as private point-to-point communication or a method using other relay nodes. It is worthwhile to note that the first message can have a same data content format as that of the transaction published to the blockchain, and is referred to here as "message" instead of "transaction" because the first message is not sent to the distributed database of the blockchain, but sent through the off-chain channel. The privacy-unprotected first data information means that the first data information is the original whose privacy is not protected or encrypted.

Step 104: Convert the privacy-unprotected first data information into privacy-protected second data information.

The privacy-protected second data information is converted from the privacy-unprotected first data information. A specific data conversion rule can be set by the underlying protocol of the blockchain, or can be set by the trusted user. The conversion process can be encrypting or performing coding operation on the first data information to obtain the second data information. In some illustrated implementations, the second data information can be a hash digest of the first data information to ensure that the second data information can uniquely correspond to the first data information.

Step 106: Store the first data information in a local database of the node device of the trusted user.

The local database of the node device of the trusted user is different from the distributed database of the node device of the trusted user on the blockchain. The first data information stored in the local database of the node device cannot be obtained by another node device on the blockchain, thereby ensuring privacy of the first data information.

In another illustrated embodiment, a verification rule can be further predetermined to ensure validity of content included in the first message, so that the node device of the trusted user verifies the first message, and stores the first data information in the local database of the node device of the trusted user after verification specified in the predetermined verification rule succeeds. For example, when the first message includes a first digital signature made by the blockchain user at least for the privacy-unprotected first data information, the predetermined verification rule can at least include: verifying that the first digital signature is made by the blockchain user at least for the privacy-unprotected first data information, so as to prevent another user from impersonating the blockchain user to tamper with the first data information.

Step 108: Send a second transaction to the blockchain, where the second transaction includes the second data information, so that the second transaction is recorded in the distributed database of the blockchain after being verified by a node device having consensus authority on the blockchain.

Any node device on the blockchain can obtain the second data information in the second transaction by accessing the distributed database of the blockchain. Because the second data information is in a privacy protection state, except the blockchain user sending the first message and the trusted user trusted by the blockchain user, no other user on the blockchain can obtain the first data information corresponding to the second data information, thereby effectively protecting privacy of the first data information.

A detailed process of recording the second transaction in the distributed database of the blockchain can be specifically set based on the consensus protocol of the blockchain and the verification rule. In some illustrated implementations, a specific step of recording the second transaction in the distributed database of the blockchain can include the following steps:
A node device having bookkeeping authority on the blockchain adds the second transaction to a candidate block.

A consensus node device having bookkeeping authority satisfying the blockchain consensus mechanism is determined from the node device having bookkeeping authority.

The consensus node device having bookkeeping authority broadcasts the candidate block to the node device of the blockchain.

The candidate block is considered as the latest block and added to the distributed database of the blockchain after the candidate block is verified and approved by a predetermined quantity of node devices on the blockchain.

In the previous embodiments, the node device having bookkeeping authority is a node device having authority to generate the candidate block, and can include a node device having users with a relatively high credit and other node devices on the blockchain. The consensus node device having bookkeeping authority can be determined from the node devices having bookkeeping authority on the candidate block based on the consensus protocol of the blockchain. The consensus protocol can include the Proof of Work protocol (PoW), the Proof of Stake protocol (PoS), the delegated proof of stake protocol (DPoS), or PBFT usually used by the consortium blockchain, etc.

Verification of the second transaction can usually include verification of a data content format of the second transaction, verification of all or a part of content of the second transaction, or verification of a digital signature included in the second transaction, etc. In some illustrated embodiments, to ensure that the node device of the trusted user sending the second transaction belongs to the trusted user set by the blockchain user, the node device on the blockchain should verify whether an identifier of the trusted user is included in the trust setting transaction initiated by the blockchain user; if yes, it indicates that an initiating user of the second transaction is a valid initiating user.

In other illustrated embodiments, to prevent any other node device from initiating the second transaction by impersonating the node device of the trusted user, the second transaction further includes a second digital signature made by the trusted user at least for the privacy-protected second data information. To reflect and prove that the second data information included in the second transaction is originally generated by the node device of the blockchain user, the second transaction can further include the first digital signature that is included in the first message and that is made by the blockchain user at least for the privacy-unprotected first data information. Correspondingly, verification of the second transaction by the node device on the blockchain should include at least verification of the second digital signature based on the public key of the trusted user, so as to record the second transaction in the distributed database of the blockchain after the verification succeeds.

The blockchain user can set a plurality of trusted users when setting the trusted user. The blockchain user can select a trusted user from the plurality of trusted users and send the first message to the trusted user. Correspondingly, in addition to completing the blockchain-based privacy transaction method described in steps 102 to 108 in the previous embodiments, the trusted user should further transmit the first message sent by the blockchain user to node devices of other trusted users, so that the other trusted users store the privacy-unprotected first data information included in the first message in local databases of the node devices of the other trusted users. Specifically, as shown in FIG. 2, the step of transmitting the first message sent by the blockchain user to the node devices of other trusted users includes the following steps:
Step 202: Obtain the trust setting transaction from the distributed database of the blockchain.

Step 204: Determine other trusted users trusted by the blockchain user based on the trust setting transaction.

Step 206: Transmit, using an off-chain method, the privacy-unprotected first data information and the privacy-protected second data information to the node devices of the other trusted users trusted by the user, so that the first data information is stored in the local databases of the node devices of the other trusted users after it is verified that the second data information is converted from the first data information.

As described in the previous embodiments, the trust setting transaction includes identifiers of all trusted users determined by the blockchain user, such as account addresses of the trusted users, public keys of the trusted users, or account names of the trusted users that can uniquely determine information about the trusted users. Therefore, all the other trusted users can be determined based on the trust setting transaction.

To prevent the first data information from losing privacy after being obtained by any node device on the blockchain, the node device of the trusted user transmits the first data information obtained by the node device to the node devices of the other trusted users through off-chain channels. To help other trusted users verify whether the second data information corresponds to the first data information, the node device of the trusted user should also transmit, through off-chain channels, the second data information converted by the trusted user to the node devices of the other trusted users. The off-chain transmission method includes but is not limited to a form of off-chain point-to-point communication, broadcast, etc.

Likewise, the node device of the another trusted user can also verify the first data information based on a predetermined verification rule, so as to store the first data information in a local database of the node device of the another trusted user after the verification succeeds. The predetermined verification rule includes verifying that the privacy-protected second data information is converted from the privacy-unprotected first data information. When the trusted user further sends the first digital signature or the second digital signature described in the previous embodiment to other trusted users using an off-chain method, the other trusted users should verify that the first digital signature is made by the blockchain user at least for the privacy-unprotected first data information, or verify that the second digital signature is made by the trusted user at least for the privacy-protected second data information, etc. Details are omitted here for simplicity.

It is worthwhile to note that after node devices of other trusted users receive the first data information and the second data information, the node devices of the other trusted users can transmit, to the trusted user, a reply such as "information receiving completion", "verification succeeds", or "agree to store the first data information". In other illustrated implementations, the node devices of other trusted users send to the trusted user respective digital signatures made by the other trusted users at least for the privacy-protected second data information. The respective digital signatures can be used to provide to the trusted user, an indication indicating that respective verification of the first message by the node device of each of the other trusted users succeeds, or a prompt indicating that the first data information is stored in the respective node device of the respective trusted user of the other trusted users. In addition, the node device of the trusted user can further record all the digital signatures in the second transaction published by the node device of the trusted user to the distributed database of the blockchain. These digital signatures recorded in the second transaction can be used, together with a fourth digital signature made by the node device of the trusted user, to support validity verification of the second data information included in the second transaction by any other node devices on the blockchain.

The previous embodiments provided in the present specification provides the blockchain-based privacy transaction method executed by the node device of the trusted user. By storing the privacy-unprotected first data information in the local database of the node device of the trusted user, the node device of the trusted user sends the privacy-protected second data information to the distributed database of the blockchain, so that the node devices of the blockchain can store the privacy-protected second data information, thereby protecting privacy of the first data information.

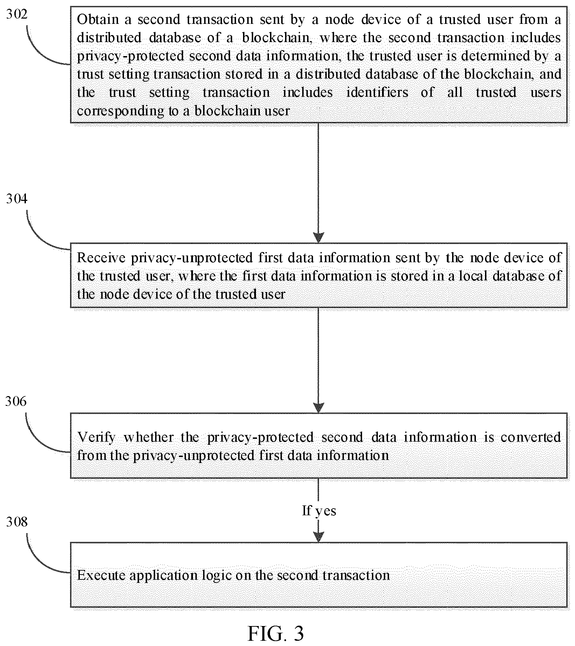

Correspondingly, the present specification further provides a blockchain-based privacy transaction application method. As shown in FIG. 3, any node device on the blockchain can perform the following steps when the node device needs to apply the second transaction.

Step 302: Obtain a second transaction sent by a node device of a trusted user from a distributed database of the blockchain, the second transaction includes privacy-protected second data information, where the trusted user is determined by a trust setting transaction stored in the distributed database of the blockchain, and the trust setting transaction includes identifiers of all the trusted users corresponding to a blockchain user.

Step 304: Receive privacy-unprotected first data information sent by the node device of the trusted user, where the first data information is stored in a local database of the node device of the trusted user. Any node device on the blockchain can obtain, through off-chain communication with the node device of the trusted user sending the second transaction, the first data information stored in the local database by the node device of the trusted user.

Step 306: Verify whether the privacy-protected second data information is converted from the privacy-unprotected first data information.

If yes,
Step 308: Execute application logic on the second transaction.

The method for setting the trust setting transaction, the rule or method for conversion between the first data information and the second data information, the method for selecting the trusted user, etc. are described in the plurality of embodiments of the blockchain-based privacy transaction method. Details are omitted here for simplicity. The application logic on the second transaction includes obtaining privacy-unprotected first data information corresponding to the privacy-protected second data information in the second transaction, or a data application or service application developed based on the first data information. The application can include a data application off the blockchain, or can include a data application on the blockchain, for example, publishing a transaction based on the first data information. This is not limited in the present specification.

Compared with a general transaction of setting parameter state or publishing privacy-protected data information, a transfer transaction in the blockchain includes some special steps because it involves changes associated with account balance statuses of at least two users. The following describes in detail the privacy transaction method provided in the present specification using an example that blockchain user A sends a transfer transaction to blockchain user B. Considering privacy security of an account of blockchain user A, blockchain user A coordinates with its trusted user SA to set a balance (assume that the balance is 100) in its account status to a privacy-protected state (for example, a hash digest value (100) corresponding to the balance 100) using the method described in some previous embodiments.

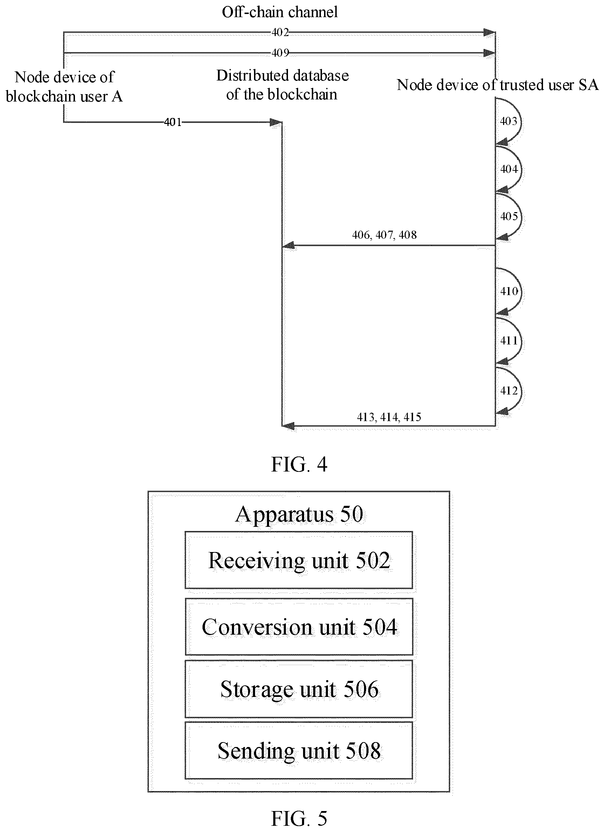

As shown in FIG. 4, a process of setting the balance 100 in the account status of blockchain user A to hash (100) can include the following steps:
Step 401: A node device of blockchain user A sends a trust setting transaction to a distributed database of a blockchain, and sets user SA as a trusted user of blockchain user A.

Step 402: The node device of blockchain user A sends a first message to a node device of trusted user SA through an off-chain channel, where the first message can include first data information-balance 100, and a digital signature Sign 1 made by user A for the first data information.

Step 403: A node device of trusted user SA converts the first data information-balance 100 into second data information-privacy-protected balance hash (100) based on a data conversion rule, and verifies Sign 1.

Step 404: After the verification described in step 403 succeeds, the node device of trusted user SA stores the first data information-balance 100 included in the first message in a local database. Optionally, the node device of trusted user SA can set a mapping table in the local database to record the first data information and the second data information.

Step 405: The node device of trusted user SA makes a digital signature Sign 2 on the verified second data information.

Step 406: The node device of trusted user SA sends a second transaction to the blockchain, where the second transaction includes the second data information-protected balance hash (100), the digital signature Sign1 made by user A for the first data information, and the digital signature Sign 2 made by user SA for the second data information.

Step 407: A consensus node on the blockchain verify the second transaction based on a consensus protocol of the blockchain, where the verification includes verifying whether user SA belongs to a trusted user determined by user A using the trust setting transaction, and verifying that digital signatures included in the second transaction are respectively made by user A and trusted user SA determined by user A.

Step 408: After the verification described in step 407 succeeds, the consensus node (a node having consensus authority) on the blockchain records a block including the second transaction in the distributed database of the blockchain, and all nodes on the blockchain update a balance status of user A to hash (100) in their databases.

Likewise, user B can also protect balance status privacy in an account of user B. A specific method can be similar to steps 401 to 408, and details are omitted here for simplicity.

It is worthwhile to note that when the privacy transaction method provided in the present specification is a privacy transfer transaction, to ensure that an account balance of a transferor and an account balance of a transferee can be verified by the node device of the trusted user, and a corresponding balance correspondingly changes, the transferor and the transferee should trust at least one trusted user trusted by both the transferor and the transferee, that is, the trust setting transaction sent by the transferor and the trust setting transaction sent by the transferee should include at least one identifier of at least one trusted user trusted by both the transferor and the transferee. In some embodiments, trusted user SA is both a trusted user of user A and a trusted user of user B.

A process that user A completes a transfer to user B can specifically include the following steps:
Step 409: The node device of user A sends, to the node device of trusted user SA trusted by both user A and user B, a transaction message Txab indicating a transfer from user A to user B. The transaction message Txab includes account identifiers (account addresses or public keys) of user A and user B, a transfer amount 10, and a digital signature Sign (10) made by user A for the transfer amount 10.

Step 410: The node device of trusted user SA converts the transfer amount 10 into a hash digest hash (10) based on a data conversion rule, verify whether an account balance 100 of user A is sufficient to pay the current transfer, and verify Sign (10).

Step 411: After the verification described in step 410 succeeds, the node device of trusted user SA stores the transfer amount 10 in the transfer message in the local database. Based on the current transfer, the node device of trusted user SA should further change the account balances of user A and user B in the local database.

Step 412: The node device of trusted user SA makes a digital signature Sign 2 (hash (10)) for the verified privacy-protected transfer amount hash (10), makes digital signatures Sign (hash (account A)) and Sign (hash (account B)) for hash digests hash (account A) and hash (account B) generated for the account balances of user A and user B after the transfer is completed.

Step 413: The node device of trusted user SA sends the second transaction to the blockchain, where the second transaction includes the privacy-protected transfer amount hash (10), the new hash digests hash (account A) and hash (account B) generated for the account balances of user A and user B after the transfer is completed, the digital signature Sign 1 (10) made by user A for the transfer amount 10, and the digital signature Sign 2 (hash (10)), Sign (hash (account A)), and Sign (hash (account B)) of user SA.

Step 414: The consensus node on the blockchain verifies the second transaction based on the consensus protocol of the blockchain. The verification includes verifying whether user SA is a trusted user determined by user A and user B using the trust setting transaction, verifying that the digital signature Sign 2 (hash (10)) included in the second transaction is a hash digest hash (10) made by trusted user SA determined by user A for the hash digest hash (10) of the transfer amount, and the digital signatures Sign (hash (account A)) and Sign (hash (account B)) of user SA are the hash digests hash (account A) and hash (account B) respectively made by the user SA for the new account balances of user A and user B.

Step 415: After the verification described in step 414 succeeds, the consensus node (a node having consensus authority) on the blockchain records a block including the second transaction in the distributed database of the blockchain, and all nodes on the blockchain update a balance status of user A to hash (account A) and a balance status of user B to hash (account B) in their databases.

Optionally, to ensure that update made by the node device of trusted user SA to the account balances of the user A and the user B after the transfer is performed is approved by user A and user B, user A and user B can separately send their updated account balances and the digital signature based on the updated account balances to the node device of trusted user SA. The previous specific process is similar to a process in some embodiments of the present specification that the trusted user selected by the user stores the privacy-protected second data information of the user in the distributed database of the blockchain, and details are omitted here for simplicity.

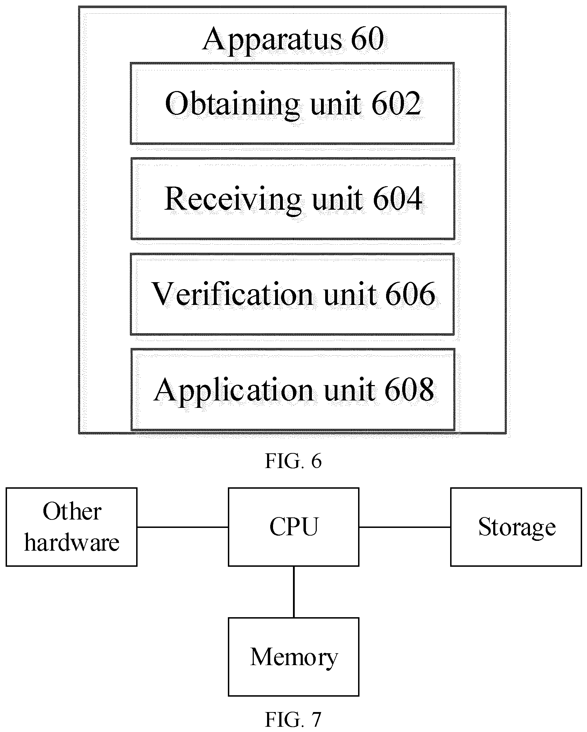

To correspond to the previous process, some embodiments of the present specification further provide a blockchain-based privacy transaction apparatus and a blockchain-based privacy transaction application apparatus. The apparatus can be implemented using software, or can be implemented using hardware or a combination of software and hardware. A software implementation is used as an example. As a logical apparatus, a corresponding computer program instruction is read into a memory for running using a central processing unit (CPU) of a device the apparatus is in. In terms of hardware, in addition to the CPU, the memory, and the storage shown in FIG. 7, a device that a network risk service implementation apparatus is in usually further includes other hardware such as a chip used to receive and send a wireless signal, and/or other hardware such as a board used to implement a network communication function.

FIG. 5 is a blockchain-based privacy transaction apparatus 50, applied to a node device of a trusted user. The trusted user is determined by a trust setting transaction stored in a distributed database of the blockchain, and the trust setting transaction includes identifiers of all trusted users corresponding to a blockchain user. The apparatus 50 includes:
a receiving unit 502, configured to receive a first message sent by the blockchain user, where the first message includes privacy-unprotected first data information;
a conversion unit 504, configured to convert the privacy-unprotected first data information into privacy-protected second data information;
a storage unit 506, configured to store the first data information in a local database of the node device of the trusted user; and
a sending unit 508, configured to send a second transaction to the blockchain, where the second transaction includes the second data information, so that the second transaction is recorded in the distributed database of the blockchain after being verified.

In other implementations, the first message includes a first digital signature made by the blockchain user at least for the privacy-unprotected first data information.

The apparatus 50 further includes a verification unit 510, configured to verify the first message based on a predetermined verification rule so as to store the first data information in the local database of the node device of the trusted user after the verification succeeds, where the predetermined verification rule further includes verifying that the first digital signature is made by the blockchain user at least for the privacy-unprotected first data information.

In other implementations, the second transaction further includes a second digital signature made by the trusted user at least for the privacy-protected second data information and the first digital signature made by the blockchain user at least for the privacy-unprotected first data information.

In other shown implementations, the apparatus 50 further includes:
an obtaining unit 512, configured to obtain the trust setting transaction from the distributed database of the blockchain;
a determining unit 514, configured to determine other trusted users trusted by the blockchain user based on the trust setting transaction; and
a transmission unit 516, configured to transmit, in an off-chain method, the privacy-unprotected first data information and the privacy-protected second data information to node devices of the other trusted users trusted by the blockchain user, so that the first data information is stored in the local databases of the node devices of the other trusted users after it is verified that the second data information is converted from the first data information.

In other shown implementations, the receiving unit 502 is configured to receive a digital signature made by the another trusted user at least based on the second data information.

The second transaction further includes the digital signature made by the another trusted user at least based on the second data information.

In other shown implementations, the privacy-protected second data information is a data digest of the privacy-unprotected first data information.

In other shown implementations, the first message includes a transfer amount of the blockchain user to another blockchain user, and the second transaction includes the privacy-protected transfer amount and privacy-protected account balances of the blockchain user and the another blockchain user.

The trusted user is also a trusted user corresponding to the another blockchain user in the trust setting transaction.

FIG. 6 shows an application apparatus 60 for a blockchain-based privacy transaction, according to the present specification, including:
an obtaining unit 602, configured to obtain a second transaction sent by a node device of a trusted user from a distributed database of the blockchain, the second transaction includes privacy-protected second data information, where the trusted user is determined by a trust setting transaction stored in the distributed database of the blockchain, and the trust setting transaction includes identifiers of all trusted users corresponding to a blockchain user;
a receiving unit 604, configured to receive privacy-unprotected first data information sent by the node device of the trusted user, where the first data information is stored in a local database of the node device of the trusted user;
a verification unit 606, configured to verify whether the privacy-protected second data information is converted from the privacy-unprotected first data information; and
an application unit 608, configured to execute application logic on the second transaction.

For an implementation process of functions and roles of each unit in the apparatus, references can be made to an implementation process of corresponding steps in the previous method. For related parts, reference can be made to partial descriptions in the method embodiments. Details are omitted here.

The previously described apparatus embodiments are merely examples. The units described as separate parts can or cannot be physically separate, and parts displayed as units can or cannot be physical modules, can be located in one position, or can be distributed on a plurality of network modules. Some or all of the units or modules can be selected based on actual needs to achieve the objectives of the solutions of the present specification. A person of ordinary skill in the art can understand and implement some embodiments of the present specification without creative efforts.

The apparatus, unit, or module illustrated in the previous embodiments can be implemented using a computer chip or an entity, or can be implemented using a product having a certain function. A typical implementation device is a computer, and the computer can be a personal computer, a laptop computer, a cellular phone, a camera phone, a smartphone, a personal digital assistant, a media player, a navigation device, an email receiving and sending device, a game console, a tablet computer, a wearable device, or any combination of these devices.

Corresponding to the previous method embodiments, some embodiments of the present specification further provide a computer device, and the computer device includes a memory and a processor. The memory stores a computer program that can be run by the processor. The processor performs steps of the blockchain-based privacy transaction method in some embodiments of the present specification when running the stored computer program. For detailed descriptions of the steps of the blockchain-based privacy transaction method, reference can be made to the previous content. Details are not described here.

Corresponding to the previous method embodiments, some embodiments of the present specification further provide a computer device, and the computer device includes a memory and a processor. The memory stores a computer program that can be run by the processor. The processor performs steps of the blockchain-based privacy transaction application method in some embodiments of the present specification when running the stored computer program. For detailed descriptions of the steps of the blockchain-based privacy transaction application method, reference can be made to the previous content. Details are not described here.

The invention is defined by the appended claims.

In a typical configuration, a computing device includes one or more processors (CPU), an input/output interface, a network interface, and a memory.

The memory can include a non-persistent memory, a random access memory (RAM), a non-volatile memory, and/or another form that are in a computer readable medium, for example, a read-only memory (ROM) or a flash memory (flash RAM). The memory is an example of the computer readable medium.

The computer readable medium includes permanent, non-permanent, movable, and unmovable media that can store information using any method or technology. The information can be a computer readable instruction, a data structure, a program module, or other data.

Examples of the computer storage medium include but are not limited to a phase change random access memory (PRAM), a static random access memory (SRAM), a dynamic random access memory (DRAM), a random access memory of another type (RAM), a read-only memory (ROM), an electrically erasable programmable read-only memory (EEPROM), a flash memory or another memory technology, a compact disc read-only memory (CD-ROM), a digital versatile disc (DVD) or another optical storage, a cassette, a cassette magnetic disk storage or another magnetic storage device, or any other non-transmission medium. The computer storage medium can be configured to store information that can be accessed by a computing device. Based on the definition in the present specification, the computer readable medium does not include transitory media such as a modulated data signal and carrier.

It is worthwhile to further note that, the terms "include", "contain", or their any other variants are intended to cover a non-exclusive inclusion, so that a process, a method, a product, or a device that includes a list of elements not only includes those elements but also includes other elements not expressly listed, or further includes elements inherent to such process, method, product or device. Without more constraints, an element preceded by "includes a ..." does not preclude the existence of additional identical elements in the process, method, product or device that includes the element.

A person skilled in the art should understand that an embodiment of the present specification can be provided as a method, a system, or a computer program product. Therefore, some embodiments of the present specification can use a form of hardware only embodiments, software only embodiments, or embodiments with a combination of software and hardware. Moreover, some embodiments of the present specification can use a form of a computer program product that is implemented on one or more computer-usable storage media (including but not limited to a disk memory, a CD-ROM, an optical memory, etc.) that include computer-usable program code.

## Claims

1. A blockchain-based privacy transaction method, applied to a node device of a trusted user, wherein the trusted user belongs to a plurality of trusted users selected and set by a blockchain user of a blockchain based on trust of the blockchain user to the plurality of trusted users, the trusted user is selected by the blockchain user from the plurality of trusted users and a trust setting transaction stored in a distributed database of the blockchain comprises identifiers of all trusted users of the plurality of trusted users, wherein the identifiers of all the trusted users of the plurality of trusted users uniquely determine information about all the trusted users of the plurality of trusted users and the method comprises:
receiving (102) a first message sent by the blockchain user, wherein the first message comprises privacy-unprotected first data information;
converting (104) the privacy-unprotected first data information into privacy-protected second data information;
storing (106) the privacy-unprotected first data information in a local database of the node device of the trusted user;
sending (108) a second transaction to the blockchain, wherein the second transaction comprises the privacy-protected second data information, so that the second transaction is recorded in the distributed database of the blockchain after being verified;
obtaining (202) the trust setting transaction from the distributed database of the blockchain;
determining (204) other trusted users trusted by the blockchain user based on the trust setting transaction; and
transmitting (206), in an off-chain method, the privacy-unprotected first data information and the privacy-protected second data information to node devices of the other trusted users so that the privacy-unprotected first data information is stored in local databases of the node devices of the other trusted users after it is verified that the privacy-protected second data information is converted from the privacy-unprotected first data information.

2. The method according to claim 1, wherein the first message comprises a first digital signature made by the blockchain user at least for the privacy-unprotected first data information; and
the method further comprises:
verifying the first message based on a predetermined verification rule so as to store the privacy-unprotected first data information in the local database of the node device of the trusted user after the verification succeeds, wherein the predetermined verification rule further comprises verifying that the first digital signature is made by the blockchain user at least for the privacy-unprotected first data information.

3. The method according to claim 2, wherein the second transaction further comprises a second digital signature made by the trusted user at least for the privacy-protected second data information and the first digital signature made by the blockchain user at least for the privacy-unprotected first data information.

4. The method according to any one of claims 1 to 3, further comprising:
receiving digital signatures made by the other trusted users at least based on the privacy-protected second data information; wherein
the second transaction further comprises the digital signature made by the other trusted users at least based on the privacy-protected second data information.

5. The method according to claim 1, wherein the privacy-protected second data information is a data digest of the privacy-unprotected first data information.

6. The method according to claim 1, wherein the first message comprises a transfer amount of the blockchain user to another blockchain user, the second transaction comprises the privacy-protected transfer amount and privacy-protected account balances of the blockchain user and the another blockchain user and the trusted user is also a trusted user corresponding to the another blockchain user in the trust setting transaction.

7. A computer device implementing a node device of a blockchain and configured to carry out the method according to any of the preceding claims.

8. One or more computer-readable storage media storing a computer program which, when run by a processor of a computer device, causes the processor to perform the method according to any one of claims 1 to 6.

## Patentansprüche

1. Blockchain-basiertes Datenschutztransaktionsverfahren, das auf eine Knotenvorrichtung eines vertrauenswürdigen Benutzers angewendet wird, wobei der vertrauenswürdige Benutzer zu einer Vielzahl von vertrauenswürdigen Benutzern gehört, die durch einen Blockchain-Benutzer einer Blockchain basierend auf einem Vertrauen des Blockchain-Benutzers in die Vielzahl von vertrauenswürdigen Benutzern ausgewählt und eingestellt werden, wobei der vertrauenswürdige Benutzer durch den Blockchain-Benutzer aus der Vielzahl von vertrauenswürdigen Benutzern ausgewählt wird und eine Vertrauenseinstellungstransaktion, die in einer verteilten Datenbank der Blockchain gespeichert ist, Kennungen aller vertrauenswürdigen Benutzer aus der Vielzahl von vertrauenswürdigen Benutzern umfasst, wobei die Kennungen aller vertrauenswürdigen Benutzer aus der Vielzahl von vertrauenswürdigen Benutzern Informationen über alle vertrauenswürdigen Benutzer aus der Vielzahl von vertrauenswürdigen Benutzern eindeutig bestimmen und das Verfahren umfasst:
Empfangen (102) einer ersten Nachricht, die durch den Blockchain-Benutzer gesendet wird, wobei die erste Nachricht nicht datenschutzgeschützte erste Dateninformationen umfasst;
Umwandeln (104) der nicht datenschutzgeschützten ersten Dateninformationen in datenschutzgeschützte zweite Dateninformationen;
Speichern (106) der nicht datenschutzgeschützten ersten Dateninformationen in einer lokalen Datenbank der Knotenvorrichtung des vertrauenswürdigen Benutzers;
Senden (108) einer zweiten Transaktion an die Blockchain, wobei die zweite Transaktion die datenschutzgeschützten zweiten Dateninformationen umfasst, so dass die zweite Transaktion in der verteilten Datenbank der Blockchain aufgezeichnet wird, nachdem sie verifiziert wurde;
Erhalten (202) der Vertrauenseinstellungstransaktion aus der verteilten Datenbank der Blockchain;
Bestimmen (204) anderer vertrauenswürdiger Benutzer, den der Blockchain-Benutzer basierend auf der Vertrauenseinstellungstransaktion vertraut; und
Übertragen (206), in einem Off-Chain-Verfahren, der nicht datenschutzgeschützten ersten Dateninformationen und der datenschutzgeschützten zweiten Dateninformationen an Knotenvorrichtungen der anderen vertrauenswürdigen Benutzer, so dass die nicht datenschutzgeschützten ersten Dateninformationen in lokalen Datenbanken der Knotenvorrichtungen der anderen vertrauenswürdigen Benutzer gespeichert werden, nachdem verifiziert wurde, dass die datenschutzgeschützten zweiten Dateninformationen aus den nicht datenschutzgeschützten ersten Dateninformationen umgewandelt wurden.

2. Verfahren nach Anspruch 1, wobei die erste Nachricht eine erste digitale Signatur umfasst, die durch den Blockchain-Benutzer zumindest für die nicht datenschutzgeschützten ersten Dateninformationen erstellt wurde; und
das Verfahren ferner umfasst:
Verifizieren der ersten Nachricht basierend auf einer vorbestimmten Verifizierungsregel, um die nicht datenschutzgeschützten ersten Dateninformationen in der lokalen Datenbank der Knotenvorrichtung des vertrauenswürdigen Benutzers zu speichern, nachdem die Verifizierung erfolgreich war, wobei die vorbestimmte Verifizierungsregel ferner das Verifizieren umfasst, dass die erste digitale Signatur durch den Blockchain-Benutzer zumindest für die nicht datenschutzgeschützten ersten Dateninformationen erstellt wurde.

3. Verfahren nach Anspruch 2, wobei die zweite Transaktion ferner eine zweite digitale Signatur, die durch den vertrauenswürdigen Benutzer zumindest für die datenschutzgeschützten zweiten Dateninformationen erstellt wurde, und die erste digitale Signatur, die durch den Blockchain-Benutzer zumindest für die nicht datenschutzgeschützten ersten Dateninformationen erstellt wurde, umfasst.

4. Verfahren nach einem der Ansprüche 1 bis 3, ferner umfassend:
Empfangen digitaler Signaturen, die durch die anderen vertrauenswürdigen Benutzer zumindest basierend auf den datenschutzgeschützten zweiten Dateninformationen erstellt wurden; wobei
die zweite Transaktion ferner die digitale Signatur umfasst, die durch die anderen vertrauenswürdigen Benutzer zumindest basierend auf den datenschutzgeschützten zweiten Dateninformationen erstellt wurde.

5. Verfahren nach Anspruch 1, wobei die datenschutzgeschützten zweiten Dateninformationen ein Daten-Digest der nicht datenschutzgeschützten ersten Dateninformationen sind.

6. Verfahren nach Anspruch 1, wobei die erste Nachricht einen Übertragungsbetrag des Blockchain-Benutzers an einen anderen Blockchain-Benutzer umfasst, die zweite Transaktion den datenschutzgeschützten Übertragungsbetrag und datenschutzgeschützte Kontoguthaben des Blockchain-Benutzers und des anderen Blockchain-Benutzers umfasst und der vertrauenswürdige Benutzer auch ein vertrauenswürdiger Benutzer ist, der dem anderen Blockchain-Benutzer in der Vertrauenseinstellungstransaktion entspricht.

7. Computervorrichtung, die eine Knotenvorrichtung einer Blockchain implementiert und eingerichtet ist, das Verfahren nach einem der vorhergehenden Ansprüche auszuführen.

8. Ein oder mehrere computerlesbare Speichermedien, die ein Computerprogramm speichern, das, wenn es von einem Prozessor einer Computervorrichtung ausgeführt wird, den Prozessor veranlasst, das Verfahren nach einem der Ansprüche 1 bis 6 auszuführen.

## Revendications

1. Procédé de transaction de confidentialité basée sur une chaîne de blocs, appliqué à un dispositif de noeud d'un utilisateur de confiance, dans lequel l'utilisateur de confiance appartient à une pluralité d'utilisateurs de confiance sélectionnés et définis par un utilisateur de chaîne de blocs d'une chaîne de blocs sur la base d'une confiance de l'utilisateur de chaîne de blocs accordée à la pluralité d'utilisateurs de confiance, l'utilisateur de confiance est sélectionné par l'utilisateur de chaîne de blocs parmi la pluralité d'utilisateurs de confiance et une transaction de définition de confiance stockée dans une base de données distribuée de la chaîne de blocs comprend des identifiants de tous les utilisateurs de confiance de la pluralité d'utilisateurs de confiance, dans lequel les identifiants de tous les utilisateurs de confiance de la pluralité d'utilisateurs de confiance déterminent de manière unique des informations concernant tous les utilisateurs de confiance de la pluralité d'utilisateurs de confiance et le procédé comprend :
la réception (102) d'un premier message envoyé par l'utilisateur de chaîne de blocs, dans lequel le premier message comprend des premières informations de données à confidentialité non protégée ;
la conversion (104) des premières informations de données à confidentialité non protégée en secondes informations de données à confidentialité protégée ;
le stockage (106) des premières informations de données à confidentialité non protégée dans une base de données locale du dispositif de noeud de l'utilisateur de confiance ;
l'envoi (108) d'une seconde transaction à la chaîne de blocs, dans lequel la seconde transaction comprend les secondes informations de données à confidentialité protégée, de sorte que la seconde transaction est enregistrée dans la base de données distribuée de la chaîne de blocs après avoir été vérifiée ;
l'obtention (202) de la transaction de définition de confiance à partir de la base de données distribuée de la chaîne de blocs ;
la détermination (204) d'autres utilisateurs de confiance auxquels l'utilisateur de chaîne de blocs fait confiance sur la base de la transaction de définition de confiance ;
et
la transmission (206), dans un procédé hors chaîne, des premières informations de données à confidentialité non protégée et des secondes informations de données à confidentialité protégée à des dispositifs de noeud des autres utilisateurs de confiance de sorte que les premières informations de données à confidentialité non protégée sont stockées dans des bases de données locales des dispositifs de noeud des autres utilisateurs de confiance après avoir vérifié que les secondes informations de données à confidentialité protégée sont converties à partir des premières informations de données à confidentialité non protégée.

2. Procédé selon la revendication 1, dans lequel le premier message comprend une première signature numérique faite par l'utilisateur de chaîne de blocs au moins pour les premières informations de données à confidentialité non protégée ; et
le procédé comprend en outre :
la vérification du premier message sur la base d'une règle de vérification prédéterminée de manière à stocker les premières informations de données à confidentialité non protégée dans la base de données locale du dispositif de noeud de l'utilisateur de confiance après que la vérification a réussi, dans lequel la règle de vérification prédéterminée comprend en outre la vérification que la première signature numérique est faite par l'utilisateur de chaîne de blocs au moins pour les premières informations de données à confidentialité non protégée.

3. Procédé selon la revendication 2, dans lequel la seconde transaction comprend en outre une seconde signature numérique faite par l'utilisateur de confiance au moins pour les secondes informations de données à confidentialité protégée et la première signature numérique faite par l'utilisateur de chaîne de blocs au moins pour les premières informations de données à confidentialité non protégée.

4. Procédé selon l'une quelconque des revendications 1 à 3, comprenant en outre :
la réception de signatures numériques faites par les autres utilisateurs de confiance au moins sur la base des secondes informations de données à confidentialité protégée ; dans lequel
la seconde transaction comprend en outre la signature numérique faite par les autres utilisateurs de confiance au moins sur la base des secondes informations de données à confidentialité protégée.

5. Procédé selon la revendication 1, dans lequel les secondes informations de données à confidentialité protégée sont un condensé de données des premières informations de données à confidentialité non protégée.

6. Procédé selon la revendication 1, dans lequel le premier message comprend une quantité de transfert de l'utilisateur de chaîne de blocs à un autre utilisateur de chaîne de blocs, la seconde transaction comprend la quantité de transfert à confidentialité protégée et des soldes de compte à confidentialité protégée de l'utilisateur de chaîne de blocs et de l'autre utilisateur de chaîne de blocs et l'utilisateur de confiance est également un utilisateur de confiance correspondant à l'autre utilisateur de chaîne de blocs dans la transaction de définition de confiance.

7. Dispositif informatique mettant en oeuvre un dispositif de noeud d'une chaîne de blocs et configuré pour réaliser le procédé selon l'une quelconque des revendications précédentes.

8. Un ou plusieurs supports de stockage lisibles par ordinateur stockant un programme informatique qui, lorsqu'il est exécuté par un processeur d'un dispositif informatique, amène le processeur à réaliser le procédé selon l'une quelconque des revendications 1 à 6.
